# EUROPEAN PATENT APPLICATION

(11) **EP 4 464 679 A1**
(43) Date of publication of application: **20.11.2024**
(21) Application number: 24175166.8
(22) Date of filing: 10.05.2024
(51) Int. Cl.: C04B 28/04, C04B 111/34

(54) **CONCRETE FORMULATION AND PROCESS FOR ITS PRODUCTION**

(30) Priority: 16.05.2023 IT 202300009849; 16.05.2023 CH 5142023
(71) Applicant: Krattiger SA, Holding, 6930 Bedano (CH)
(72) Inventor: KRATTIGER, Andreas Reinhard, 6967 Dino (CH)
(74) Representative: Fabiano, Piero

(57) **Abstract**

Described is an aqueous cementitious concrete formulation that further comprises a plurality of granules of asphalt millings in addition to a plurality of aggregates comprising sand and gravel.

## Description

### Background of the invention

The present invention concerns a concrete formulation, the process for its production and the products obtainable with it.

In particular, the invention concerns a concrete formulation containing asphalt millings from mineral recycling and a filler of aggregates (or inert filler). More specifically, the present invention concerns a concrete formulation where one part of the filler of aggregates results from asphalt millings in mixture with sand and other aggregates, such as gravel and fine gravel. In particular, recycled asphalt millings are obtained by milling a road surface.

### Description of the known art.

Concretes are generally obtained from cements with added fillers of aggregates, i.e. fillers of materials that do not react with cement and whose main features are to give concrete the technical characteristics required for its end use. Examples of fillers are gravel and sand; in detail, aggregates typically comprise sand and grus for about 50% and gravel and fine gravel for the other 50%. The amount of aggregates and its composition and particle size affects the mechanical characteristics required for the final product.

In the concrete formulation, the amount of water used in the mixture plays an important role; in fact, the strength of the final product results from the ratio of water to cement. If the ratio is low, there will be less shrinkage of the concrete but also an increase in tensile forces that lead to cracking of the concrete; additionally, a formulation with little water and less fluid typically requires to be levelled after being pumped in-situ. On the other hand, the more water is added, the more fluid the concrete becomes, thus reducing the tensile forces but increasing the risk of permeability and cracking due to the shrinkage of the concrete when it shrinks during the drying step.

As known, high permeability caused by air pores from the evaporation of excess water is a problem as it is a pathway of infiltrating water into the concrete of the final manufactured article; this results in higher maintenance costs thereof. For example, a concrete with a water-to-cement W/C ratio higher than 0.6 can develop porosity of between 12-15%, which leads to infiltrations and increases the width of the shrinkage cracks. Currently, waterproof concretes are C 30/37 with (F_{ct,eff}) of 2.9, but with a water/concrete ratio of 0.45-0.48, concrete in an exposure class of C 55/60 is obtained which may develop RCK compressive strength up to 70 N/mm², causing cracking (the term 55 identifies the compressive strength class on a cylindrical specimen and 60 identifies the compressive strength class on a cubic specimen). If a C 30/37 is used without any provisions, an effective tensile strength of the concrete (F_{ct,eff}) of 3.8 - 4.3 N/mm² or higher is obtained, resulting in a proportional increase in the casing cost and an average of cracks of 0.27 - 0.35 ml per m² (linear metre per square metre) at a cost of CHF 70-90 per square metre for crack repair and waterproofing.

### Object of the invention

An object of the present invention is to solve the above-mentioned problems and to provide a concrete formulation that has a fluid consistency, i.e. a consistency that is easy to implement and more cost-effective than traditional waterproof concrete, such as e.g. the C 30/37 concrete mentioned and which leads to a final manufactured article comprising concrete with reduced cracking together with excellent compressive strength values, low drying shrinkage and a calculated effective design tensile strength (F_{ct,eff}) of 2.9 N/mm².

In other words, the concrete formulation must comply with ordinances on the prevention and disposal of mineral waste resulting from the demolition of concrete, asphalt and its asphalt millings, the regulations of the technical compliance of hardened concrete mixtures which are related to compressive strength (EN 12390-3), water impermeability of cured concrete (EN 12390-8), tensile strength (EN 12390-6) and shrinkage of concrete (EN 12390-16), calculated and required by the designer.

This purpose is achieved by means of the present invention which provides a concrete formulation comprising a plurality of granules of asphalt millings and a plurality of aggregates comprising sand and gravel according to claim 1.

In particular, the granules of asphalt millings have an average size in the range between 0.06 mm and 30 mm.

The term "asphalt" herein means the mineral bituminous concrete obtained by mixing appropriate amounts of coarse aggregates (gravel), fine aggregates (sand and *filler*) and bitumen used for the road paving. Advantageously, the mineral granules of asphalt millings are obtained from the millings of road surface maintenance. These millings are passed through an electromechanical sieve shaker (such as a commercial Controls sieve shaker model 15 D0410) to ensure that these granules are sized in a desired range, i.e. containing pebbles or stones at least 95% by weight having size in the range between 0.06 mm and 30 mm and 5% bituminous binder. Pebbles or stones present in the millings, due to their mechanical strength, contribute to the abrasion resistance of the asphalt and are necessary to obtain the appropriate tensile and compressive strengths for a C30/37 concrete.

In particular, the granules of asphalt millings have a size in the range between 0.06 mm and 31.5 mm, which size is measured by using the standard method UNI EN 12620, UNI EN-933-1 and UNI 1097-6, which allows the particle-size graph of granules of asphalt millings to be obtained by using sieves with holes with gradually decreasing diameters, as shown e.g. in table 4.

According to a possible aspect, the granules of asphalt millings have a particle size distribution as follows, taking into account that for each range, the smaller mesh size is that of the meshes that retain the particles and, therefore, that the particles are larger than such value. In detail, particles of millings with a size in the range between 31.5 mm and 22.4 mm (excluded) are present in a percentage between 0.0% and 0.6%, preferably equal to 0.4%; in the range between 22.4 mm and 16 mm (excluded) in a percentage between 8.6% and 9.5%, preferably equal to 9.3%; in the range between 16 mm and 8 mm (excluded) in a percentage between 21.2% and 21.9%, preferably equal to 21.7%; in the range between 8 mm and 4 mm (excluded) in a percentage between 22.3% and 24.7%, preferably equal to 23.9%; in the range between 4 mm and 2 mm (excluded) in a percentage between 17.8% and 20.2%, preferably equal to 18.3%; in the range between 2 mm and 1 mm (excluded) in a percentage between 14% and 14.4%, preferably equal to 14.3%; in the range between 1 mm and 0.5 mm (excluded) in a percentage between 5.3% and 8.2%, preferably equal to 8.1%; in the range between 0.5 mm and 0.25 mm (excluded) in a percentage between 1.3% and 3.5%, preferably equal to 3.4%; in the range between 0.25 mm and 0.125 mm (excluded) in a percentage between 0.3% and 0.9%, preferably equal to 0.8%, and in the range between 0.125 mm and 0.063 mm (excluded) in a percentage between 0.1% and 0.4%, preferably equal to 0.1%.

As a matter of fact, the particle-size graph allows to obtain the percentage distribution of the size (or diameter) of granules in a solid mass consisting of granules of different size. In particle-size analysis, sieves characterised by openings (meshes) are used. Each sieve allows to retain the fraction of solid (granules) with size larger than the openings (meshes) of the sieve and allows the fraction of solid with size smaller than the meshes of the sieve to pass through. The sieves are arranged in series (stacked on top of each other). The sieves are stacked by placing the sieves with larger meshes on top and gradually stacking sieves with openings at the bottom, until the sieve with smaller meshes is stacked in the end portion of the sieve shaker.

After stacking the sieves, a solid sample (in granules) is weighed before being placed in the sieve shaker, thus identifying the total weight of the granules from which the particle-size graph is derived. The column of sieves is generally rested on a mechanical shaker, also known as a vibrating screen. The vibrating screen allows the sieve column to be shaken for a set period of time. After each time interval, the fraction of solid (granules) retained in each sieve is weighed. This operation is repeated for a number of times equal to the number of sieves. The weight of each solid fraction retained in each sieve is compared to the weight of the total solid before sieving, to obtain the percentage (by mass) of solid retained in each tray.

This way, it is possible to obtain the particle-size graph in which the percentage by weight of solids (granules) retained depending on the diameter of the granules is obtained.

The term gravel means aggregate with size between 16 mm and 32 mm. The term grus means aggregate with size between 0.1 mm and 8 mm. The term sand means aggregate with size between 0.1 mm and 4 mm. The term fine gravel means aggregate with size between 8 mm and 16 mm. The term asphalt millings means aggregate between 0.06 mm and 31.5 mm.

The applicant has surprisingly found that the granules of asphalt millings, as characterised above, allow to dramatically reduce shrinkage cracking of a concrete mixture with a water/cement ratio in the range of 0.45 - 0.48. In particular, it was found that the granules of asphalt millings used allow to reduce the presence of cracking by up to 98%, resulting in a reduction in the maintenance costs of the final manufactured article, which decrease from approximately CHF 90 per sq. m to CHF 5/6 per sq. m.

It was further surprisingly found that the use of granules of asphalt millings of the above-mentioned size allows on average to replace 30% of the aggregates normally used in the concrete formulation.

According to an aspect of the invention, the amount of granules of asphalt millings to the total aggregates in the formulation and, consequently, in the manufactured article, is in the range between 25% and 38%, preferably about 30% by weight.

In a typical formulation, 39.5 parts of grus, 30.5 parts of gravel and 30 parts of asphalt granules are used (by weight to the total aggregates), as shown in table 1 and table 2.

The invention further concerns a concrete manufactured article obtained with the said concrete formulation, a process to produce the said formulation and the use of asphalt granules to reduce cracking in a concrete manufactured article.

According to an aspect of the invention, the amount of asphalt granules to the total aggregates in the formulation, and consequently in the article, is in the range between 25% and 38% by weight and is preferably about 30% by weight.

In a typical formulation of the invention, about 70% of aggregates of sand, grus and gravel, and 30% of asphalt millings are used.

Without seeking to provide a full and binding explanation of the phenomenon observed, the investigations and analyses carried out by the applicant show that, in addition to improving drying shrinkage and obtaining the desired effective tensile strength, impermeability, salt resistance and elastic modulus levels that meet the requirements of durability and structural strength are obtained.

The invention allows to obtain waterproof concrete with an average penetration of 11 mm according to EN 12390-8 standard, carbonation of less than 4.5 mm/year equal to 100 years, according to SIA 262/1 Annex C, a controlled tensile strength and a drying shrinkage which allow to reduce the risk of cracking in a concrete manufactured article.

As shown e.g. in table 5, C25/30-type concretes have an effective tensile strength between 2.6 N/mm² and 2.7 N/mm², while C30/37-type concretes have an effective tensile strength between 2.9 N/mm² and 3.0 N/mm². C45/55-type concretes (values not shown in the table) have an effective tensile strength of 3.8 N/mm². For C25/30 concretes, table 5 further shows a water/cement (W/C) ratio between 0.52 and 0.60, a maximum water penetration in mm of about 25 mm and a drying shrinkage between -0.350‰ and -0.460‰. For C30/37 concretes, the W/C ratio is between 0.45 and 0.55, the maximum water penetration is between 25 mm and 30 mm and the drying shrinkage is between -0.350‰ and -0.460‰.

### Description of the figures

The invention will now be discussed in more detail with reference to the following example of production and to the following figures, where:

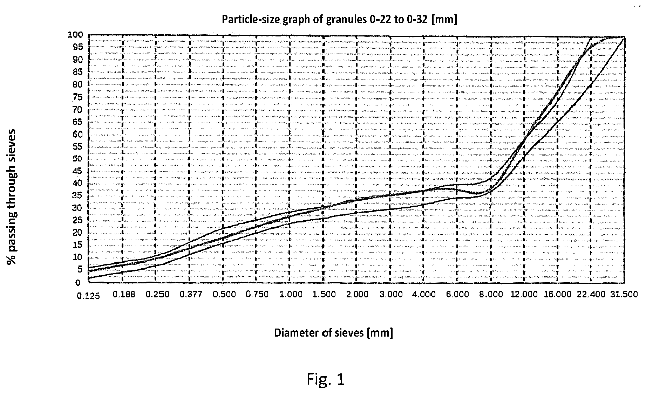

- Fig. 1 shows the particle-size graph of a C30/37 concrete of known art with a W/C ratio between 0.45-0.48

### Description of implementations of the invention

The invention concerns a concrete formulation comprising a plurality of asphalt millings and a plurality of aggregates comprising sand and gravel.

Recycled asphalt millings are obtained by a process whereby recycled asphalt millings are obtained from a road surface in which it is necessary to replace it with a layer of new asphalt.

According to an aspect of the present invention, a concrete formulation comprises a plurality of asphalt millings and a plurality of aggregates comprising sand and gravel. Preferably, the amount of asphalt millings is in the range of 20% to 38% by weight to the total aggregates, preferably equal to 30% by weight to the total aggregates.

According to a possible aspect, the particle size of asphalt millings is in the range between 0.06 mm and 31.5 mm, preferably at least 98% has a size between 0.06 mm and 22.4 mm. The size of the asphalt millings is measured by sieving according to UNI EN 12620 and UNI 933-1 standards.

The average size of the asphalt millings can be measured by means of a particle-size graph, by using a measuring device known in the art, such as e.g. electromechanical sieve shakers. Examples of electromechanical sieve shakers available on the market are Controls 15-D0410 sieve shakers. The particle-size graph allows to measure the percentage by weight of granules of millings depending on their diameter.

A further aspect of the present invention relates to a manufactured article of concrete obtained with a formulation according to the formulation described above, which is characterised by having an average of shrinkage cracks of less than 0.02 ml per m², with a rated opening defined at the centre of gravity of the casing of more than 0.2mm. Advantageously, this allows a 95% and 98% reduction in the risk of cracking compared to a concrete manufactured article obtained according to a formulation known in the art.

Shrinkage cracks can be determined by means of Swiss standard SIA 272 related to the waterproofing and drainage of underground buildings and in underground construction.

Advantageously, an average of shrinkage cracks of less than 0.02 ml per m² allows to minimise the number of maintenance services of concrete once placed in the structure of interest and therefore to minimise the costs related to such services.

According to a possible aspect, the concrete manufactured article has a compressive strength in a range between 41 N/mm² and 43 N/mm², measured according to SN EN 12390-3 standard. Advantageously, this compressive strength range allows not to exceed indirect tensile values of 2.9 N/mm².

Examples of concrete manufactured articles with a compressive strength of less than 41 N/mm² are, for example, C25/30 concretes.

According to a possible aspect, the invention's concrete manufactured article has a water-to-cement ratio in the range between 0.43 and 0.48.

Advantageously, the lower the water-to-cement ratio, the better the impermeability and the higher compressive strength and tensile strength level of concrete.

According to a possible aspect, the invention's concrete manufactured article has an effective tensile strength between 2.9 N/mm² and 3.0 N/mm².

The tensile strength can, for example, be measured by indirect tensile strength according to SN EN 12390-6 standard.

According to a possible aspect, the concrete manufactured article according to the invention has a maximum water penetration measured according to EN 1290-9 standard between 11 mm and 30 mm required by the standard.

The maximum water penetration is also known as water impermeability for a concrete manufactured article in its cured condition and can be measured by means of SN EN-12390-8 standard.

According to a possible aspect, the concrete manufactured article according to the invention has a drying shrinkage measured according to the SN EN 12390-16 standard or according to SIA 262/1 Annex F standard in the range between - 0.350‰ and -0.460‰.

A further aspect of the present invention relates to a process for the production of a formulation according to what is described above, or a manufactured article according to what is described above, characterised by preparing a mixture of aggregates comprising gravel, sand and granules of asphalt millings, the granules being present in an amount between 20% and 38%, preferably 30%, by weight to the total weight of the aggregates. Preferably, the granules of asphalt millings have a size in the range between 0.06 mm and 22.4 mm.

According to a possible aspect, the asphalt granules are obtained by milling an asphalt pavement of a road.

Advantageously, asphalt granules can be made from road surfaces that require maintenance, thus allowing them to be recycled at a low cost.

A further aspect of the present invention concerns the use of asphalt granules in the above-described embodiment as an admixture in the production of concrete for cracking reduction in a manufactured article obtained with said additive-mixed concrete.

In other words, the technical effect of using the asphalt millings of the invention, which are used to replace part of the traditional aggregates, is to substantially reduce the risk of shrinkage cracks, thus improving the mechanical characteristics and allowing the above-mentioned effective tensile strength values to be obtained, that correspond to the amount of shrinkage iron defined by the structural engineer.

As can be seen in tables 1 and 2, the particle-size graph in the examples 1 and 2 is comparable; in other words, the asphalt millings are comparable in size to the traditional formulation of aggregates, as shown in example 3. Despite their presence in a percentage of 30% by weight of the total aggregates, the concretes in example 1 and example 2 both provided fluid concretes with excellent processability and fluid consistency with class F4/S4. This fluid consistency simplifies concrete's laying or casting processes in situ. The fluid consistency can be measured using methods known in the art, such as by means of the Concrete slump test or by means of the UNI EN 206-1 standard.

In an implementation, the size of the asphalt granules are advantageously within the particle-size graph of the total aggregates, as can be seen in the tables of the following examples.

### EXAMPLE 1 - Production of a formulation according to the invention

*A mixture of concrete aggregates was prepared, which comprises sand, gravel and granules of asphalt millings, each material having the composition and particle-size distribution according to table 1.*

**Table 1**

| | | **Sizes of sieve meshes [mm]** | | | | | | | | | |
|---|---|---|---|---|---|---|---|---|---|---|---|
| **Aggregates** | **Pre-sieving (% by weight)** | **31.5** | **22.4** | **16** | **8** | **4** | **2** | **1** | **0.50** | **0.25** | **0,125** |
| Sand 0.1-4 mm (%) | 0.0 | 0.0 | 0.0 | 0.0 | 0.0 | 0.0 | 0.0 | 0.0 | 0.0 | 0.0 | 0.0 |
| Grus 0.1-8mm(%) | 39.5 | 39.5 | 39.5 | 39.5 | 38.4 | 30.5 | 22.4 | 16.2 | 9.4 | 2.9 | 1.3 |
| Fine gravel 8-16 mm (%) | 0.0 | 0.0 | 0.0 | 0.0 | 0.0 | 0.0 | 0.0 | 0.0 | 0.0 | 0.0 | 0.0 |
| Gravel 16-32 mm (%) | 30.5 | 30.5 | 24.3 | 5.5 | 0.3 | 0.2 | 0.2 | 0.2 | 0.2 | 0.2 | 0.2 |
| Asphalt Millings (%) | 30.0 | 30.0 | 30.0 | 27.2 | 20.7 | 13.5 | 8.0 | 3.8 | 1.3 | 0.3 | 0.1 |
| Cumulative total (%) | 100 | 100.0 | 93.8 | 72.2 | 59.4 | 44.1 | 30.6 | 20.1 | 10.9 | 3.4 | 1.5 |

The mixture of aggregates which is used in concrete is equal to 1,839 kg of which 726 kg (39.5%) consists of grus 0.1-8, 561 kg (30.5%) Gravel 16-32, 552 kg (30%) asphalt millings. These values refer to weights in a dry condition. This mixture is sieved by using sieves with openings between 31.5 mm and 0.125 mm. The amounts of the various components passing through each sieve are set forth as a percentage in table 1. The asphalt recycled products have a size between 0.1 mm and 16 mm. The grus has a size between 0.125 and 8 mm. The gravel has a size between 0.125 mm and 22.4 mm.

### EXAMPLE 2 - Production of a formulation accordins to the invention.

*A mixture of concrete aggregates was prepared, which comprises sand, gravel, granules of asphalt millings, having the composition and particle-size distribution according to table 2.*

**Table 2**

| | | **Sizes of sieve meshes [mm]** | | | | | | | | | |
|---|---|---|---|---|---|---|---|---|---|---|---|
| **Aggregates** | **Pre-sieving (% by weight)** | **31.5** | **22.4** | **16** | **8** | **4** | **2** | **1** | **0.50** | **0.25** | **0,125** |
| Sand 0.1-4 mm (%) | 26.0 | 26.0 | 26.0 | 26.0 | 26.0 | 25.7 | 23.1 | 18.4 | 12.4 | 6.6 | 3.1 |
| Fine gravel 8-16 mm (%) | 20.0 | 20.0 | 20.0 | 19.4 | 1.0 | 0.1 | 0.1 | 0.1 | 0.1 | 0.1 | 0.1 |
| Grus 0.1-8 mm (%) | 0 | 0.0 | 0.0 | 0.0 | 0.0 | 0.0 | 0.0 | 0.0 | 0.0 | 0.0 | 0.0 |
| Gravel 16-32 mm (%) | 24.0 | 22.7 | 9.0 | 1.2 | 0.1 | 0.1 | 0.1 | 0.1 | 0.1 | 0.1 | 0.1 |
| Asphalt Millings (%) | 30 | 30.0 | 30.0 | 28.7 | 23.7 | 16.7 | 11.9 | 7.8 | 4.9 | 2.6 | 0.1 |
| Cumulative total (%) | 100 | 98.7 | 85.0 | 75.3 | 50.8 | 42.6 | 35.2 | 26.4 | 17.5 | 9.4 | 3.4 |

### EXAMPLE 3 - Production of a formulation accordins to the known art.

*A mixture of concrete aggregates was prepared, which comprises sand, gravel, having the composition and particle size distribution according to table 3.*

The mixture used in the concrete is 1,896 kg of which 963 kg (50.8%) consists of grus 0.1-8 mm, (17.7%) consists of fine gravel, 597 kg (31.5%) consists of gravel. These values refer to weights in a dry condition. This mixture is sieved by using sieves with openings between 31.5 mm and 0.125 mm. The amounts of the various components passing through each sieve are set forth as a percentage in table 3. The particle-size graph is shown in figure 1. The grus has a size between 0.125 and 8 mm. The fine gravel has a size between 0.1 mm and 18 mm and the gravel has a size between 22.4 mm and 0.1 mm

**Table 3**

| | | Sizes of sieve meshes [mm] | | | | | | | | | |
|---|---|---|---|---|---|---|---|---|---|---|---|
| Aggregates | Pre-sieving (% by weight) | 31.5 | 22. 4 | 16 | 8 | 4 | 2 | 1 | 0.5 0 | 0.2 5 | 0,12 5 |
| Sand sieving 0.1-4 mm (%) | 0.0 | 0.0 | 0.0 | 0.0 | 0.0 | 0.0 | 0.0 | 0.0 | 0.0 | 0.0 | 0.0 |
| Grus 0.1-8 mm (%) | 50.8 | 50.8 | 50. 8 | 50. 8 | 49. 4 | 39. 2 | 28. 9 | 20. 8 | 12. 1 | 3.8 | 1.7 |
| Fine gravel 8-16 mm (%) | 17.7 | 17.7 | 17. 7 | 16. 3 | 2.6 | 0.2 | 0.2 | 0.1 | 0.1 | 0.1 | 0.1 |
| Gravel 16-32 mm (%) | 31.5 | 31.5 | 25. 1 | 5.6 | 0.3 | 0.2 | 0.2 | 0.2 | 0.2 | 0.2 | 0.2 |
| Cumulative total (%) | 100 | 100. 0 | 93. 6 | 72. 7 | 52. 3 | 39. 5 | 29. 2 | 21. 1 | 12. 4 | 4.0 | 1.9 |

As can be seen in figure 1 and table 3, the particle-size graph of the aggregates in examples 1 and 2 is comparable; in other words, granules of asphalt millings are of such size that they are comparable with the formulation of traditional aggregates. Despite the presence of asphalt granules in a percentage of 30% by weight to the total aggregates, the formulation of example 1 and example 2 both provided fluid concretes with excellent processability and F4/S4 fluid consistency.

### EXAMPLE 4 - Particle-size graph of granules of recycled asphalt millings.

A quantity of 4381 g of granules of recycled millings undergoes a particle-size test by means of a sieve shaker (Controls Model 15-D0410) with sieves equipped with openings (meshes) between 31 mm and 0.063 mm (table 4). Table 4 shows the sizes of the meshes of each sieve in millimetres (mm), the partial retained solid in grams (g) for each sieve and the cumulative retained material in grams (g). The cumulative retained material of millings is the sum of the masses of the partial retained material of a specific sieve plus the cumulative retained material of millings in all the sieves placed on top.

**Table 4**

| | Sizes of sieve meshes [mm] | | | | | | | | | | |
|---|---|---|---|---|---|---|---|---|---|---|---|
| Retained material | 31.5 | 22.4 | 16 | 8 | 4 | 2 | 1 | 0.50 | 0.25 | 0,125 | 0.063 + Bottom |
| Partial retained | 0.0 | 0.0 | 408 | 951 | 1046 | 800 | 629 | 356 | 149 | 34 | 8 |
| Cumulative retained | 0.0 | 0.0 | 408 | 1359 | 2405 | 3205 | 3834 | 4190 | 4339 | 4373 | 4381 |
| **Cumulative passing** | **100** | **100.0** | **90.7** | **69.0** | **45.1** | **26.8** | **12.5** | **4.4** | **1.0** | **0.2** | **0.1** |

The total granules of millings equal to 4,381 g pass through a first sieve with 31.5-mm meshes. After passing through the first sieve, no granules are retained. Subsequently, the granules of millings pass through a second sieve with 22.4-mm meshes, which is placed below the first sieve. The partial retained material of the millings in the second sieve is equal to 0.0 g of granules of millings with a size less than 31.5 mm and greater than 22.4 mm, equal to 0.0% of the total granules of millings (4,381g). This reveals that 4,381 g, i.e. 90.7% of the total millings, pass through the second sieve. This reveals that 90.7% of the granules of millings have a size less than 22.4 mm. The cumulative retained material in the third sieve is 408 g with a diameter greater than 16 mm and can then be sieved in a fourth sieve with 16-mm meshes. In this fourth sieve, 951 g are retained with a size larger than 8 mm. The amount of millings passing through the fourth sieve of less than 8 mm is 3,022 g. These calculations are performed in a similar way for the subsequent sieves. The granules of millings have a size in a range between 0.06 mm and 31.5 mm.

**Table 5** below summarises the characteristics and parameters, in particular compressive and tensile strengths and drying shrinkage and Water/Cement ratio (W/C) of concretes according to the invention.

**Table 5**

| Exposure | Reinforced concrete - | | Reinforced concrete - | | Reinforced concrete exposed | | Damage from aggressive | |
|---|---|---|---|---|---|---|---|---|
| classes, depending on environmental conditions and risk of corrosion. | Carbonation corrosion | | Corrosion from seawater and chlorides | | to frost and meltwater | | water with chemicals and ground waters. | |
| | | | | | Waterproof concrete concrete. CR Recycling Natural aggregates 75% Recycling material 25% | | Purifiers, aggressive and ground water soils. | |
| | | | Salt water = a | | | | | |
| | | | Chlorides = b | | | | | |
| Swiss exposure classes and application | XC 3 | XC4 | XS 1a | XS 2a | XF 3 | XF4 | XA 2 | XA 3 |
| | | | XD 1b | XS 3a | XF 3 RB | | | |
| | | | XD 2b | XD 3b | | | | |
| Compressive strength fck,eff: 28 days | C25/30 | C30/37 | C30/37 | C30/37 | 30/37 | 30/37 | 30/37 | 30/37 |
| F cm, N/mm2: Cylinder | | | | | | | | |
| F cm, N/mm2: maximal | 29 | 34 | 34 | 34 | 34 | 34 | 34 | 34 |
| | 34 | 38 | 38 | 38 | 38 | 38 | 38 | 38 |
| F cm, N/mm2: Cube. | | | | | | | | |
| F cm, N/mm2: maximal | 34 | 41 | 41 | 41 | 41 | 41 | 41 | 41 |
| | | | 43 | | | | | |
| | 36 | 43 | | 43 | 43 | 43 | 43 | 43 |
| Effective tensile strength of the concrete | | | | | | | | |
| F ct, eff: Effective F ctm | 2.6 N/mm² | 2.9 N/mm² | 2.9 N/mm² | 2.9 N/mm² | 2.9 N/mm² | 2.9 N/mm² | 2.9 N/mm² | 2.9 N/mm² |
| Maximal F ctm | 2.7 N/mm² | 3.0 N/mm² | 3.0 N/mm² | 3.0 N/mm² | 3.0 N/mm² | 3.0 N/mm² | 3.0 N/mm² | 3.0 N/mm² |
| Resp. W/C ratio W/C_{eq} ratio | | | | | | | | |
| Maximum W/C_{eq} | 0.52 | 0.52 | 0.52 | 0.45 | 0.50 | 0.45 | 0.50 | 0.45 |
| | 0.60 | 0.55 | 0.55 | 0.48 | 0.53 | 0.48 | 0.53 | 0.48 |
| Maximum water penetration in mm | 25 | 25 | 25 | 30 | 30 | 30 | 30 | 30 |
| EN 12390-8 | | | | | | | | |
| Maximum chloride content 5) Reinforced concrete | 0.10% Cl | 0.10% Cl | 0.10% Cl | 0.10% Cl | 0.10% Cl | 0.10% Cl | 0.10% Cl | 0.10% Cl |
| Drying shrinkage SIA 262/1 90 days ‰ | - 0.350 max. | - 0.350 max. | - 0.350 max. | - 0.350 max. | - 0.350 max. | - 0.350 max. | - 0.350 max. | - 0.350 max. |
| Concrete Dry tech A | - 0.400 | - 0.400 | - 0.400 | - 0.400 | - 0.400 | - 0.400 | - 0.400 | - 0.400 |
| | - 0.460 | - 0.460 | - 0.460 | - 0.460 | - 0.460 | - 0.460 | - 0.460 | - 0.460 |
| Concrete Drytech R | | | | | | | | |
| Minimum cement content (kg/m³) | 280 | 300 | 300 | 320 | 300 | 320 | 300 | 320 |

## Claims

1. Formulation for concrete, comprising cement, water, a plurality of granules of asphalt millings and a plurality of aggregates comprising sand and gravel.

2. Formulation for concrete according to claim 1, wherein the amount of asphalt millings is in the range of 20% to 38% by weight of total mixture of aggregates, comprising gravel, sand and asphalt granules, preferably the amount of asphalt millings is 30% by weight of total aggregates.

3. Formulation for concrete according to claim 1 or 2, wherein the size of asphalt millings is between 0.06 mm and 31.5 mm, preferably at least 98% of the asphalt millings have size between 0.06 mm and 22.4 mm, said average size of asphalt millings is measured by sieving according to UNI EN 12620 and EN 933-1 standards.

4. Formulation for concrete according to one of the preceding claims, wherein the amount by weight percent of milled granules to the total millings for the following size ranges is between:
- 0.0% and 0.6%, for the range between 31.5 mm and 22.4 mm,
- 8.6% and 9.5% for the range between 22.4 mm and 16 mm,
- 21.2% and 21.9%, for the range between 16 mm and 8 mm,
- 22.3% and 24.7%, for the range between 8 mm and 4 mm,
- 17.8% and 20.2%, for the range between 4 mm and 2 mm,
- 14% and 14.4%, for the range between 2 mm and 1 mm,
- 5.3% and 8.2%, for the range between 1 mm and 0.5 mm,
- 1.3% and 3.5%, for the range between 0.5 mm and 0.25 mm,
- 0.3% and 0.9%, for the range between 0.25 mm and 0,125 mm,
- 0.1% and 0.4%, for the range between 0.125 mm and 0.063 mm.

5. Manufactured article of concrete obtained by a formulation according to one of the preceding claims, **characterised in that** it has an average of shrinkage cracks less than 0.02 ml per m², measured with a rated opening defined at the centre of gravity of the casing greater than 0.2 mm according to SIA 272 standard.

6. Manufactured article according to the preceding claims, wherein the compressive strength is greater than 41 N/mm² measured according to SN EN 12390-3 standard.

7. Manufactured article according to claim 5 or 6, wherein effective tensile strength is between 2.9 N/mm² and 3.0 N/mm².

8. Manufactured article according to one of preceding claims 5-7, wherein drying shrinkage is in the range between -0.410‰ and -0.460‰, measured according to SN EN 12390-16 standard.

9. Process for producing a formulation according to one of claims 1 to 4 or a manufactured article according to one of claims 5 to 6, **characterised in that** a mixture of aggregates comprising gravel, sand and granules of asphalt millings is prepared, said granules being present in an amount of 20% to 38% by weight to the total weight of aggregates.

10. Process according to claim 9, wherein the granules of asphalt millings have size between 0.06 mm and 31.5 mm, preferably at least 98% of the granules of asphalt millings have a size between 0.06 mm and 22.4 mm, said size of the granules of asphalt millings being measured by means of a particle-size graph obtained with a sieve shaker.

11. Process according to claim 9 or 10, wherein said asphalt granules are obtained by milling and optionally sieving an asphalt pavement of a road.

12. Use of asphalt granules according to one of claims 1 to 4 as an admixture in the production of concrete for cracking reduction in a manufactured article obtained with said additive-mixed concrete.
